Europäisches Patentamt

**European Patent Office**

Office européen des brevets

(11) Publication number: **0 056 625**
A2

# EUROPEAN PATENT APPLICATION

(21) Application number: **82100245.8**

(22) Date of filing: **14.01.82**

(51) Int. Cl.³: **F 16 B 41/00**

(30) Priority: **21.01.81 JP 7378/81**

(43) Date of publication of application:
**28.07.82 Bulletin 82/30**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Moriya, Makoto**
**20-4, Higashioi 3-chome Shinagawa-ku**
**Tokyo(JP)**

(72) Inventor: **Hayashi, Isao**
**55-11, Kashiwa-cho Asahi-ku**
**Yokohama-shi Kanagawa-ken(JP)**

(72) Inventor: **Mochida, Haruo**
**23-2-41, Serigaya 2-chome Konan-ku**
**Yokohama-shi Kanagawa-ken(JP)**

(74) Representative: **Patentanwälte Grünecker,**
**Dr.Kinkeldey Dr.Stockmair, Dr.Schumann,Jakob,**
**Dr.Bezold Meister, Hilgers, Dr.Meyer-Plath**
**Maximilianstrasse 43**
**D-8000 München 22(DE)**

(54) Bolt with an anchor.

(57) A bolt with an anchor usable in the case where the threaded portion of the bolt is covered by a casing. The bolt with an anchor according to the present invention comprises a stem fixed to the end surface of the threaded portion of the bolt and a flexible anchor-like locking member fixed to the stem so as to be expandable outwards when the bolt is loosened or unscrewed, in addition to the bolt. The anchor-like locking member is made of a synthetic resin by molding with the stem implanted within the minimum radial dimension portion of the locking member.

EP 0 056 625 A2

BOLT WITH AN ANCHOR

## BACKGROUND OF THE INVENTION

### Field of the Invention

The present invention relates to a bolt with an anchor, and more specifically to a bolt with an anchor which is usable in the case where the threaded portion of the bolt is completely covered by a casing.

### Description of the Prior Art

A bolt screwed into a nut is liable to loosen or come out of the nut when vibrational force is applied to the bolt and nut. In order to solve this problem, methods of various kinds have been previously adopted. For instance, a nylon locking member can be inserted into the threaded hole of the nut in order to increase the frictional force generated therebetween. An adhesive agent can be applied to the threaded hole of the nut or to the head of the bolt in order to fix the bolt and/or nut. Or, a locking pin inserted into a hole formed in the threaded portion of a bolt is used to prevent the bolt from being extracted from a nut.

In the conventional methods of locking a bolt to a nut, however, there exist various problems. The basic problems are as follows:

In the case of the nylon locking member, once the bolt is loosened or extracted from the nut, it is impossible to repeatedly use the same nylon locking member.

In the case of the adhesive agent, once the bolt is loosened, or extracted from the nut, it is impossible to repair the bolt and nut when the same adhesive agent is not on hand.

In the case of the locking pin inserted into a hole formed in the threaded portion of a bolt, it is impossible to use this method when the threaded portion of the bolt is covered by a casing, because it is impossible to reach the bolt in order to insert the pin thereinto after the bolt has been screwed into the nut. A more detailed description of the case where the locking pin is used will be made hereinbelow under DETAILED DESCRIPTION OF THE PREFERRED EMBODIMENT with reference to the attached drawing.

## SUMMARY OF THE INVENTION

With these problems in mind therefore, it is the primary object of the present invention to provide a bolt with an anchor usable in the case where the threaded portion of the bolt is covered by a casing from the inside.

To achieve the above mentioned object, the bolt with an anchor according to the present invention comprises a stem, one end of which is fixed to the end surface of the threaded portion of the bolt in such a way that it extends in the axial direction of the bolt, having a diameter smaller than the minor diameter of external thread of the bolt, and a flexible anchor-like locking member including a tapered disk smaller in diameter than the bolt with a plurality of tabs extending both radially outward and axially toward the head of the bolt, the tapered disk portion of which is fixed to the flange portion of the stem. In this case, the maximum radial dimension of the anchor-like locking member is larger than the minor diameter of external thread of the bolt, and the minimum radial dimension of the anchor-like locking member is smaller than the minor diameter of external thread of the bolt.

## BRIEF DESCRIPTION OF THE DRAWINGS

The features and advantages of the bolt with an anchor according to the present invention will be more clearly appreciated from the following description taken in conjunction with the accompanying drawings in which like reference numerals designate corresponding elements and in which;

Fig. 1 is a side view partly in section of a sample prior-art bolt with an anchor;

Fig. 2 is a side view partly in section of a preferred embodiment of a bolt with an anchor according to the present invention; and

Fig. 3 is a bottom view of the anchor-like locking member used for the bolt with an anchor according to the present invention.

## DETAILED DESCRIPTION OF THE PREFERRED EMBODIMENT

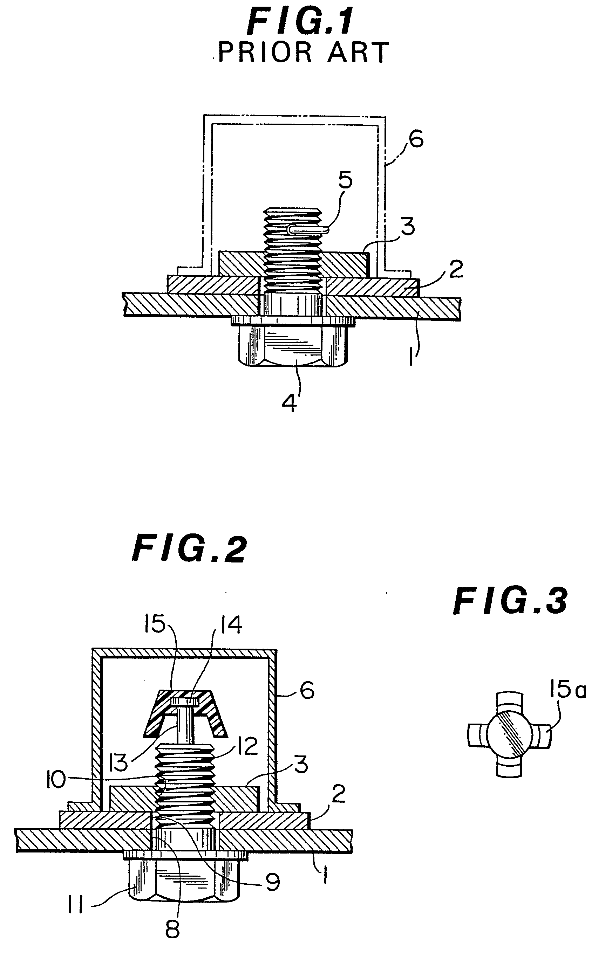

To facilitate understanding of the present invention, a brief reference will be made to a sample prior-art bolt with an anchor with reference to Fig. 1.

In the figure, the reference numeral 1 denotes a fixed member, the reference numeral 2 denotes another member to be fastened to the fixed member, onto which a nut 3 is fixed by, for instance, welding. The above-mentioned member 2 to be fastened is fastened to the fixed member with a bolt 4 screwed into the nut 3. In order to prevent the bolt screwed into the nut 3 from being unscrewed due to, for instance, vibration applied thereto, a pin 5 is first inserted into a hole formed in the threaded portion of the bolt 4 and bent on both the sides so as not to come out of the hole, after the bolt 4 has been screwed into the nut 3.

In the prior-art bolt with a pin explained above, however, in the case where a casing 6, shown by dot-dot-dashed lines in the figure, is fixed to the member 2 to be fastened covering the nut 3, there exists a problem such that it is impossible to insert the pin into the hole from the structural point of view because the casing 6 is arranged so as to cover the threaded portion of the bolt 4.

In view of the above description, reference is now made to Fig. 2, in which a preferred embodiment of a bolt with an anchor according to the present invention is illustrated.

In the figure, the reference numeral 1 denotes a fixed member having a hole 8 formed therein, the reference numeral 2 denotes a member to be fastened onto the fixed member 1, which is placed in such a way that the center of the hole 8 in the fixed member 1 is aligned with that of a hole 9 formed in the member 2 to be fastened.

A nut 3 is fixed by welding onto the member 2 to be fastened with the center of the hole 10 of the nut 3 aligned with those of the holes 8 and 9. In addition, a casing·6 is fixed onto the member 2 to be fastened in such a way that the casing covers the bolt and nut completely. The reference numeral 11 denotes a bolt screwed into the nut 3 to fasten the member 2 to the fixed member 1.

On the end surface of the threaded portion 12 of the bolt 11, a stem 13 of an anchor according to the present invention is fixed in such a way that it extends in the axial direction of the bolt 11. The diameter of the stem 13 is smaller than the minor diameter of the external thread of the bolt 11. On the free end surface of the stem 13, a flange 14 is formed having a diameter larger than that of the stem 13 but smaller than the minor diameter of the external thread of the bolt 11.

To this flange 14 is attached a flexible anchor-like locking member including a tapered disk smaller in diameter than the bolt with a plurality of tabs extending both radially outward and axially toward the head of the bolt, as depicted in Fig. 3. The locking member 15 is formed by the molding process with the flange portion 14 of the stem 13 implanted within the minimum radial dimension portion of the locking member 15, and with the maximum radial dimension (the tapered disk) portion of the locking member 15 facing the end surface of the threaded portion 12 of the bolt 11. The minimum radial dimension of the anchor-like locking member is smaller than the minor diameter of external thread 12 of the bolt 11, in other words, smaller than the diameter of the hole 10 of the nut 3; however, the maximum radial dimension of the anchor-like locking member is larger than the minor diameter of external thread 12 of the bolt 11, in other words, larger than the diameter of the hole 10 of the nut 3.

The following is a description of the operation of the anchor according to the present invention. In order to fix the member 2 to be fastened to the fixed member 1, first, the hole 8 in the fixed member 1 and the hole 9 in the member 2 to be fastened are aligned with each other and with the hole 10 of the nut 3. Next, the bolt 11 with the bolt anchor is inserted into the holes 8, 9, and 10 by first fitting the anchor portion to the holes. In this case, the anchor-like locking member 15 is elastically deformed radially inward as it passes through the holes 8, 9, and 10. The threaded portion 12 of the bolt 11 is screwed through the hole 10 and the locking member 15 expands radially outward by its own elastic force after having passed therethrough, so that the locking member 15 returns its original shape. As a result, even if the bolt 11 is rotated in such a direction as to be unscrewed, since the maximum radial dimension portion of the locking member 15 is locked by the nut 3 near the threaded hole 10 thereof, the bolt 11 cannot further be unscrewed.

Therefore, even if the bolt 11 is rotated by vibration in the direction to be extracted after the member 2 to be fastened has been fixed to the fixed member 1, the maximum radial dimension portion of the locking member 15 is brought into contact with the nut 3, thus preventing the bolt from being extracted further or unscrewed to such a degree that the threaded portion 12 of the bolt 11 is detached from the hole 10 of the nut 3.

Further, even where the bolt 11 is loosened and there exists a little play between the member 2 to be fastened and the fixed member 1, since the threaded portion 12 of the bolt 11 is fitted to the thread portion of the hole 10 of the nut 3, a load due to the presence of play applied to the member 2 to be fastened is supported by the threaded portion 12 of the bolt 11, without applying an excessive load to the stem 13. Therefore, in the case when the nut 3 is positioned within a space defined by the member 2 to be fastened and the casing 6, it is possible to easily prevent the bolt from being unscrewed.

As described above, in the bolt with an anchor according to the present invention, since the bolt anchor comprises a stem, one end of which is fixed to the end surface of the threaded portion of the bolt in such a way that it extends in the axial direction of the bolt, having a diameter smaller than the minor diameter of external

thread of the bolt, and a flexible anchor-like locking member, the tapered disk portion of which is fixed to the flange portion of the stem in such a way that its maximum radial dimension portion faces the end surface of the threaded portion of the bolt, having a radial dimension larger than the diameter of central hole of the nut, it is possible to securely prevent the bolt from being extracted from the nut even when the bolt is loosened due to vibration, even in the case where the threaded portion of the bolt and the nut are covered by a casing.

Furthermore, even if the bolt is loosened, it will remain attached, even without any other fastening parts or adhesive agents.

It will be understood by those skilled in the art that the foregoing description is in terms of a preferred embodiment of the present invention wherein various changes and modifications may be made without departing from the spirit and scope of the invention, as set forth in the appended claims.

**0056625**

## WHAT IS CLAIMED IS:

1.      A bolt with an anchor which comprises:

(a)   a bolt having a threaded portion and a head portion;

(b)   a stem having a flange portion at one end thereof, the other end thereof being fixed to the end surface of the threaded portion of said bolt in such a way that said stem extends in the axial direction of said bolt; and

(c)   a flexible anchor-like locking member including a disk smaller in diameter than said bolt with a plurality of tabs extending both radially outward and axially toward the head of said bolt, the disk portion thereof being fixed to the flange portion of said stem.

2.      A bolt with an anchor as set forth in claim 1, wherein the diameter of said stem is smaller than the minor diameter of external thread of said bolt.

3.      A bolt with an anchor as set forth in claim 1, wherein said flexible, anchor-like locking member is formed into a cross shape in horizontal cross-section and a frustum shape in vertical cross-section.

4.      A bolt with an anchor as set forth in either claim 1 or 3, wherein the maximum radial dimension of said locking member is larger than the minor diameter of

. external thread of said bolt.

5. A bolt with an anchor as set forth in either claim 1 or 3, wherein the minimum radial dimension of said anchor-like locking member is smaller than the minor diameter of external thread of said bolt.

6. A bolt with an anchor as set forth in either claim 1 or 3, wherein said flexible anchor-like locking member is made of a synthetic resin.

7. A bolt with an anchor as set forth in either claim 1 or 3, wherein said flexible anchor-like locking member is manufactured by molding with the flange portion of said stem implanted within the minimum radial dimension portion of said anchor-like locking member.

1/1

# *FIG.1*
## PRIOR ART

# *FIG.2*

# *FIG.3*